# FASCICULE DE BREVET EUROPEEN

(11) **EP 1 451 654 B1**
(45) Date de publication et mention de la délivrance du brevet: **15.07.2009**
(21) Numéro de dépôt: 02804636.5
(22) Date de dépôt: 09.12.2002
(51) Int. Cl.: G05B 19/425

(54) **PROCEDE D'APPRENTISSAGE DE FIN DE COURSE ET DISPOSITIF POUR LA MISE EN OEUVRE DU PROCEDE**
VERFAHREN ZUM ANSCHLAGLERNEN UND EINRICHTUNG DAFÜR
METHOD FOR END-OF-TRAVEL LEARNING AND DEVICE THEREFOR

(30) Priorité: 10.12.2001 FR 0115930
(43) Date de publication de la demande: 01.09.2004
(73) Titulaire: Somfy SAS, 74300 Cluses (FR)
(72) Inventeur: LAGARDE, Eric, F-74700 Sallanches (FR); BRUNO, Serge, F-74460 Marnaz (FR)
(74) Mandataire: Bugnion Genève
(86) Numéro de dépôt international: PCT/IB2002/005188
(87) Numéro de publication internationale: WO 2003/050629

(56) Documents cités:
- EP-A- 0 426 577
- EP-A- 0 784 146
- WO-A-96/39740
- DE-A- 3 726 885
- FR-A- 2 754 117
- US-A- 5 729 101

## Description

L'invention se rapporte à un procédé d'apprentissage des fins de course d'un produit mobile déplacé au moyen d'un actionneur dont l'une au moins des fins de course est déterminée par une butée franche.

L'invention concerne également un dispositif permettant la mise en oeuvre du procédé d'apprentissage.

Il existe dans l'état de la technique des brevets relatifs à des dispositifs ou des procédés d'apprentissage des fins de course.

Le brevet français FR 2743602 concerne une installation de fermeture ou de protection solaire motorisée. Dans ce brevet, on suppose l'existence de deux butées franches hautes et basses. Le but est de distinguer ces butées d'un obstacle ou encore d'un défaut tel que point dur dans une coulisse. L'usage d'un compteur bidirectionnel (incrémentation décrémentation) est proposé en association avec un moyen de mesure de variations de vitesse ou de couple. Le procédé d'apprentissage décrit met à profit l'existence de butées franches mais il n'y a pas d'indication spécifique de la position basse par l'installateur.

Dans le brevet français FR 2754117 portant sur un dispositif de commande de store ou volet roulant, on suppose également l'existence de deux butées franches. La procédure décrite est celle d'une séquence automatique visant à l'affectation du bon sens de rotation moteur en réponse à un ordre donné depuis le point de commande. Au cours de cette procédure, le produit part automatiquement à la rencontre de la première puis de la deuxième butée. Une comparaison des temps de parcours est effectuée, et la position des butées est éventuellement enregistrée de manière automatique. Le procédé d'apprentissage utilisé met donc à profit l'existence de butées franche. II n'y a pas d'indication spécifique de la position basse par l'installateur.

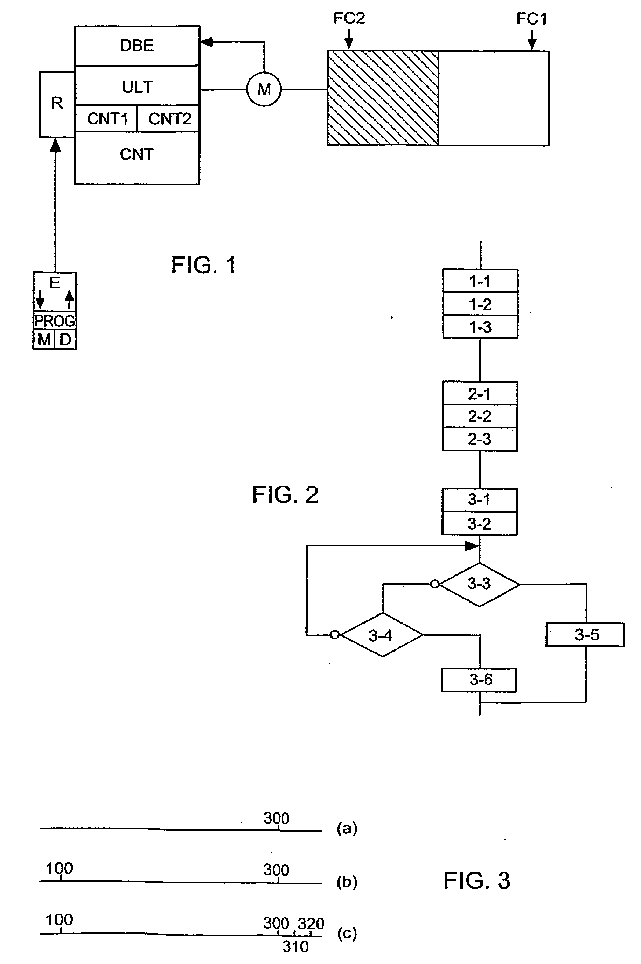

Le brevet français FR 2780089 décrit un dispositif de commande d'un moteur d'entraînement d'un volet roulant. Ce brevet répond au souci de réaliser un dispositif de réglage automatique permettant d'identifier la position basse, et la nature de la liaison entre l'actionneur (ou le tube d'enroulement) et le tablier. A cet effet, le dispositif comprend au moins des moyens d'analyse fine de variations du couple moteur, Ces moyens sont représentés en Figure 1 et comprennent au moins un capteur (1) par exemple dit de « micro-déplacements » et un convertisseur analogique-numérique (2). La Figure 2 de ce brevet montre clairement le type d'analyse de variations de couple nécessaire, et donc la précision du dispositif de mesure. L'application des algorithmes présentés dans ce brevet est donc nécessairement coûteuse. II n'y a pas d'indication spécifique de la position basse du volet roulant par l'installateur.

Le brevet français FR 2790787 porte sur un dispositif de détection de la fin d'empilement des lames d'un volet roulant. Ce brevet décrit plus particulièrement les difficultés de détection de fin d'empilement des lames d'un tablier de volet roulant, lorsqu'il s'agit de lames enroulables. Comme précédemment, la détection de couple est réalisée au moyen d'un capteur sensible de « micro-déplacements ». La fin d'empilement est détectée par le rattrapage d'un jeu angulaire. Malgré ses avantages, cette invention nécessite donc à la fois le capteur précédent et son électronique de traitement, mais aussi un montage mécanique spécifique de création dudit jeu angulaire. II n'y a pas d'indication spécifique de la position basse du volet par l'installateur, ni de corrélation de la détection de micro-déplacement à une valeur particulière d'un compteur de déplacement.

La demande de brevet d'invention FR 2 808 835 présente la particularité de proposer un procédé de réglage dans lequel une deuxième fin de course est mémorisée de manière implicite après qu'ait été enregistrée, soit automatiquement (dans le cas d'une butée franche), soit par procédure manuelle, la première fin de course. Ainsi donc, dans le cas (cf. page 9 ligne 27) d'un produit présentant une seule butée franche permettant le régalage automatique (par exemple butée haute), le procédé selon cette demande nécessiterait que l'installateur
- active le mode de réglage automatique et envoie le produit vers sa butée franche en appuyant sur la touche montée, jusqu'à provoquer l'enregistrement automatique de la position fin de course haute.
- reprenne la main en commandant le produit jusqu'à l'amener dans la position basse désirée,
- et de nouveau renvoie le produit vers la butée haute, cette manoeuvre ayant pour but d'enregistrer la position basse.

II apparaît que cette façon de faire l'enregistrement de la position "non automatique" est surprenante et suffisamment contraire à l'intuition pour engendrer l'incompréhension des installateurs et une perte de temps sur les chantiers. De plus, ce procédé empêche une procédure rapide d'installation puisqu'elle oblige l'installateur à provoquer l'enregistrement automatique de la butée avant de repositionner le produit sur la position sans butée.

On se trouve donc dans la situation où il existe, d'un côté, des dispositifs simples mais qui ne peuvent s'appliquer qu'à des produits présentant deux butées franches, tandis qu'il existe, d'un autre côté, des dispositifs beaucoup plus complexes en précision requise de la part de capteurs et d'organes de mesure et de traitement logiciel.

On connaît aussi des documents EP 0 784 146 et EP 0 426 577 deux procédés d'apprentissage des fins de course d'un dispositif domotique.

Le but de l'invention est par conséquent d'améliorer les procédés et dispositifs connus.

Plus particulièrement, l'invention vise à remédier à l'inconvénient indiqué ci-dessus en proposant un nouveau procédé de type semi-automatique, permettant à un même actionneur d'entraîner des produits de nature différente, pour autant que ces produits comprennent au moins une butée franche.

Notamment, le procédé d'apprentissage permet de déterminer une caractéristique particulière du produit mobile de manière à ce qu'il en soit tenu compte ultérieurement lors d'étapes de commande du produit mobile.

A cette fin, le procédé selon l'invention est défini par la revendication 1.

Selon une première variante d'exécution du procédé, la séquence des étapes a lieu de manière continue. Cette première variante du procédé permet à l'installateur de s'assurer, s'il le souhaite, que le mode d'apprentissage s'accomplit en totalité.

Selon une deuxième variante du procédé, la séquence des étapes a lieu de manière discontinue. Cette deuxième variante du procédé permet, par exemple, de différer la totalité de l'apprentissage, lorsqu'une installation rapide est recherchée.

Selon un mode d'exécution préféré, la mémorisation de la position du produit s'effectue au travers de l'association de la position du produit à une valeur numérique et la mémorisation de ladite valeur numérique. Ladite valeur numérique mémorisée peut être corrigée d'une quantité prédéterminée.

Le dispositif mettant en oeuvre le procédé est **caractérisé en ce qu**'il comprend au moins un émetteur, un récepteur lié à un actionneur commandant un moteur agissant sur un produit mobile, ledit actionneur comprenant un compteur, une unité logique de traitement associée à au moins deux mémoires, dont les valeurs mémorisées correspondent à des valeurs du compteur identifiant des fins de course du produit mobile, et un détecteur de butées.

De préférence, le produit mobile est un volet roulant, la première position est une position fermée et la deuxième position est une position ouverte.

Ces volets comprennent généralement une butée mécanique haute, qui retient le tablier à partir d'un certain niveau d'enroulement. Cette butée est facilement détectable par le moyen de détection placé dans l'actionneur (mesure de variation de couple ou d'effort, mesure de variation de vitesse...).

Par contre, en ce qui concerne le point bas, on ne trouvera de butée franche que dans certaines situations correspondant à un mécanisme d'arc-boutement permettant la liaison entre tablier et tube d'enroulement. Ces mécanismes sont connus comme verrous: lorsque le volet est en position complètement déroulée et que l'actionneur poursuit son mouvement de rotation, le verrou devient arc-bouté et exerce une forte pression sur l'ensemble du tablier, empêchant ainsi tout relevage frauduleux de celui-ci depuis l'extérieur. Le réglage d'arc-boutement est une condition essentielle du bon fonctionnement d'un tel mécanisme. II est donc nécessaire pour ces produits que l'actionneur dépasse la position correspondant à la position basse, de manière à exercer la pression désirée pour provoquer l'arc-boutement.

D'autres liens entre le tube d'enroulement et le tablier ne présentent pas ce caractère de butée franche en position basse: il s'agit de simples clinquants, ou encore de sangles. Dans ce cas, il est exclu de dépasser significativement la position basse, sous peine de provoquer un dégrafage des liens, des contraintes du volet contre les parois du caisson, ou un enroulement à contre-sens.

La description de l'invention est donnée ci-après dans le cas d'un volet roulant à lames empilables, mais il est clair que l'invention s'applique de la même façon à tout actionneur destiné à être monté sur des produits mobiles de fermeture, d'occultation ou de protection solaire, de nature différente mais caractérisés par au moins une butée franche. Le déplacement de ces produits dans l'espace peut être aussi bien horizontal, incliné que vertical.

Le schéma-bloc d'un dispositif permettant la mise en oeuvre du procédé selon l'invention est décrit tout d'abord en référence à la figure 1. Ce dispositif comprend un émetteur E, un récepteur R, ces deux éléments formant un organe de commande E/R, une unité logique de traitement ULT associée à un compteur CNT à incrémentation décrémentation (selon le sens de commande de l'actionneur) dont des valeurs particulières peuvent être mémorisées soit à partir de la commande E/R, soit à partir du signal d'un détecteur de butée DBE dans des mémoires CNT1, CNT2. Bien entendu, l'actionneur comprend également un moteur M qui entraîne effectivement le produit mobile commandé par l'ULT. De telles unités logiques de traitement sont connues dans l'état de la technique, notamment des publications antérieures indiquées ci-dessus.

Un mode d'exécution du procédé selon invention est décrit plus particulièrement en référence aux Figures 2 et 3.

Dans une première phase (Phase 1), décomposée en trois sous-phases, 1.1 à 1.3:
- phase 1.1: l'installateur agit d'abord sur l'organe de commande jusqu'à atteindre une première position fin de course FC1, par exemple, s'il s'agit d'un volet roulant à lames empilables, cette position correspond à une position "fermée, ou occultation totale" du volet et toutes les lames visibles sont empilées. II faut remarquer que cette position est bien souvent la position initiale lors d'un processus d'assemblage puisque le tablier repose sur la partie basse de la baie, et que l'installateur fixe alors les lames hautes au tube d'enroulement. A titre d'exemple, on suppose que l'état du compteur dans cette position est 300 (voir aussi la Figure 3, ligne (a));
- phase 1.2: l'installateur utilise alors l'organe de commande (émetteur E) pour envoyer un ordre spécifique de mémorisation de cette première position. De préférence, cet ordre spécifique est donné par une combinaison explicite de deux touches: une touche dite de programmation PROG et une touche (M: montée) ou (D: descente) indiquant la position de la fin de course, dans le cas présent D. Pour une translation, il s'agirait des touches (G: gauche) ou (D: droite);
- phase 1.3: à réception de cette commande, l'ULT procède à l'enregistrement de la valeur du compteur CNT dans la première mémoire CNT1.

Dès cet instant, la suite du réglage devient indépendante de l'installateur.

Dans une deuxième phase (Phase 2), décomposée en trois sous-phases 2.1 à 2.3 :
- phase 2.1: l'actionneur part dans le sens permettant d'entraîner le produit vers la butée franche;
- phase 2.2: le détecteur (DBE) détecte cette butée et l'ULT provoque l'arrêt de l'actionneur;
- phase 2.3: l'ULT enregistre le contenu du compteur CNT dans une deuxième mémoire CNT2.

A titre d'exemple, on peut supposer que CNT2 vaut 100 (voir Figure 3, ligne (b)).

Dans une troisième phase (Phase 3), on a les étapes suivantes:
- étape 3.1: l'actionneur part dans le sens permettant de retourner vers la position FC1;
- étape 3.2: ayant atteint FC1, l'actionneur dépasse cette position. Le dépassement maximum autorisé est fixé à une valeur prédéterminée DMAX;
- étape 3.3: au cours du mouvement de dépassement, le capteur DBE analyse la présence éventuelle d'une butée. Si une telle butée est détectée, alors le programme de gestion de l'ULT passe à l'étape 3.5, sinon,
- étape 3.4: au cours du mouvement de dépassement, l'ULT teste si la position courante du compteur reste inférieure à CNT1 augmenté de la valeur DMAX. (Par exemple, DMAX = 20). Si c'est bien le cas, le programme boucle sur la sous-phase 3.3, sinon, c'est l'étape 3.6 avec arrêt du moteur et sortie du programme d'initialisation;
- à l'étape 3.5: il y a arrêt du moteur, remplacement de CNT1 par la valeur courante du compteur CNT et sortie du programme d'initialisation. Par exemple, la nouvelle valeur de CNT1 est maintenant 310.

Par la suite, les fins de course utilisées sont dictées par les contenus CNT1 et CNT2.

Comme il est connu de l'homme de l'art, il est souvent utile d'arrêter le mouvement vers la butée franche un peu avant la valeur enregistrée CNT2, afin d'éviter une contrainte inutile sur le produit. De même, il est tout à fait possible d'arrêter le mouvement un peu avant CNT1 s'il s'agit d'un lien rigide ou d'un verrou qu'on souhaite ne pas trop comprimer. Ainsi, il peut être utile de diminuer la valeur mémorisée d'une quantité prédéterminée afin de réaliser un tel arrêt anticipé.

On remarquera que le passage en phase 3.5 correspond par exemple à un volet avec verrou d'arc-boutement, tandis que le passage en phase 3.6 correspond à un volet avec liaison souple (sangle ou clinquant).

Comme déjà indiqué, le procédé selon l'invention peut se décliner selon deux variantes:
- dans une première variante, les phases 2.1 et 3.1 correspondent à des mouvements provoqués par l'ULT en enchaînement des phases précédentes et sans intervention de l'utilisateur,
- dans une deuxième variante, ces phases ne sont pas provoquées automatiquement, mais résultent de commandes successives provoquées par l'installateur ou ultérieurement par l'utilisateur et amenant le produit pour une première fois en butée FC2 puis pour une seconde fois en position FC1. Un nombre quelconque d'ordres de mouvements dans l'une ou l'autre direction peut alors s'intercaler entre ces évènements donnant naissance à une reprise du programme d'initialisation.

## Revendications

1. Procédé d'apprentissage des fins de course d'un produit mobile déplacé au moyen d'un actionneur, dont l'une au moins des fins de course est déterminée par une butée franche, ledit procédé étant **caractérisé par** la succession des étapes suivantes:
- positionnement du produit dans une première position de fin de course;
- mémorisation de la position du produit;
- commande de déplacement du produit vers une deuxième position de fin de course déterminée par une butée franche;
- identification de la deuxième position de fin de course;
- mémorisation de la position du produit;
- analyse du lien cinématique entre l'actionneur et le produit mobile au voisinage de la première position pour sélectionner une stratégie de manoeuvre de l'actionneur en réponse à une commande ultérieure de positionnement du produit mobile dans la première position,
l'analyse du lien cinématique comprenant au moins les étapes suivantes:
- commande de déplacement du produit mobile vers la première position de fin de course;
- dépassement de ladite première position;
- pendant le dépassement, vérification de la présence d'une butée;
- si aucune butée n'est détectée, arrêt du produit lorsqu'une position prédéterminée, calculée à partir de la première position est atteinte.

2. Procédé d'apprentissage selon la revendication 1, **caractérisé en ce que** l'analyse du lien cinématique comprend l'étape : si une butée est détectée, arrêt du produit et mémorisation de sa position.

3. Procédé d'apprentissage selon l'une des revendications 1 ou 2, **caractérisé en ce que** la séquence desdites étapes a lieu de manière continue.

4. Procédé d'apprentissage selon l'une des revendications 1 ou 2, **caractérisé en ce que** la séquence desdites étapes a lieu de manière discontinue.

5. Procédé d'apprentissage selon l'une des revendications précédentes, **caractérisé en ce que** la mémorisation de la position du produit s'effectue au travers de l'association de la position du produit à une valeur numérique et la mémorisation de ladite valeur numérique.

6. Procédé d'apprentissage selon l'une des revendications précédentes, **caractérisé en ce** ladite valeur numérique mémorisée est corrigée d'une quantité prédéterminée.

7. Procédé d'apprentissage selon l'une des revendications précédentes, **caractérisé en ce que** le produit mobile est un volet roulant, la première position est une position fermée et la deuxième position est une position ouverte.

8. Procédé d'apprentissage selon la revendication 7, **caractérisé en ce que** s'il s'agit d'un volet roulant à lames empilables, la position fermée correspond à une position dans laquelle toutes les lames visibles sont empilées.

9. Dispositif mettant en oeuvre le procédé selon l'une des revendications précédentes, **caractérisé en ce qu'**il comprend au moins un émetteur (E), un récepteur (R) lié à un actionneur commandant un moteur (M) agissant sur un produit mobile, ledit actionneur comprenant un compteur (CNT), une unité logique de traitement (ULT) associée à au moins deux mémoires (CNT1, CNT2), dont les valeurs mémorisées correspondent à des valeurs du compteur identifiant des fins de course du produit mobile et un détecteur de butées (DBE).

## Claims

1. A process for learning the limits of travel of a movable product displaced by means of an actuator, at least one of the limits of travel of which is determined by an end stop, said process being one wherein the succession of the following steps is carried out:
- ) positioning of the product in a first limit of travel position;
- ) storage of the position of the product;
- ) command of displacement of the product to a second limit of travel position determined by an end stop;
- ) identification of the second limit of travel position;
- ) storage of the position of the product;
- ) analysis of the kinematic link between the actuator and the movable product in the vicinity of the first position so as to select a strategy for maneuvering the actuator in response to a later command of positioning of the movable product in the first position,
the analysis of the kinematic link comprising at least the following steps:
- ) command of displacement of the movable product to the first limit of travel position;
- ) overstepping of said first position;
- ) during the overstepping, verification of the presence of a stop;
- ) if no stop is detected, halting of the product when a predetermined position, calculated on the basis of the first position is reached.

2. The learning process as claimed in claim 1, wherein the analysis of the kinematic link comprises the step: if a stop is detected, halting of the product and storage of its position.

3. The learning process as claimed in one of claims 1 or 2, wherein the sequence of said steps takes place in a continuous manner.

4. The learning process as claimed in one of claims 1 or 2, wherein the sequence of said steps takes place in a discontinuous manner.

5. The learning process as claimed in one of the preceding claims, wherein the storage of the position of the product is performed through the association of the position of the product with a numerical value and the storage of said numerical value.

6. The learning process as claimed in one of the preceding claims, wherein said stored numerical value is corrected by a predetermined quantity.

7. The learning process as claimed in one of the preceding claims, wherein the movable product is a roller blind, the first position is a closed position and the second position is an open position.

8. The learning process as claimed in claim 7, wherein in the case of a roller blind with stackable slats, the closed position corresponds to a position in which all the visible slats are stacked.

9. A device implementing the process as claimed in one of the preceding claims, wherein the device comprises at least a transmitter (E), a receiver (R) linked to an actuator controlling a motor (M) acting on a movable product, said actuator comprising a counter (CNT), a logic processing unit (ULT) associated with at least two memories (CNT1, CNT2), whose stored values correspond to values of the counter identifying limits of travel of the movable product and a stops detector (DBE).

## Patentansprüche

1. Lernverfahren zum Lernen der Endstellungen eines beweglichen Gegenstands, der mittels einer Betätigungsvorrichtung verschoben wird, wobei wenigstens eine der Endstellungen durch einen freien Anschlag bestimmt ist, **gekennzeichnet durch** die Folge der folgenden Schritte:
- Positionieren des Gegenstands in einer ersten Position der Endstellung;
- Speichern der Position des Gegenstands;
- Steuerung der Verschiebung des Gegenstands in eine zweite Position der **durch** einen freien Anschlag bestimmten Endstellung,
- Identifizieren der zweiten Position der Endstellung;
- Speichern der Position des Gegenstands;
- Analyse der kinematischen Verbindung zwischen der Betätigungsvorrichtung und dem beweglichen Gegenstand in der Nähe der ersten Position, um eine Strategie der Betätigung der Betätigungsvorrichtung als Antwort auf einen späteren Positionierungsbefehl zum Positionieren des beweglichen Gegenstands in die erste Position auszuwählen,
wobei die Analyse der kinematischen Verbindung wenigstens die folgenden Schritte umfasst:
- Steuerung der Verschiebung des beweglichen Gegenstands in die erste Position der Endstellung;
- Überschreiten der erwähnten ersten Position;
- während des Überschreitens Kontrolle des Vorhandenseins eines Anschlags;
- wenn kein Anschlag entdeckt wird, Anhalten des Gegenstands, wenn eine vorbestimmte Position erreicht wird, welche ausgehend von der ersten Position berechnet wird.

2. Lernverfahren nach Anspruch 1, **dadurch gekennzeichnet, dass** die Analyse der kinematischen Verbindung den folgenden Schritt umfasst: Wenn der Anschlag entdeckt wird, Anhalten des Gegenstands und Speichern seiner Position.

3. Lernverfahren nach einem der Ansprüche 1 oder 2, **dadurch gekennzeichnet, dass** die Folge der erwähnten Schritte kontinuierlich stattfindet.

4. Lernverfahren nach einem der Ansprüche 1 oder 2, **dadurch gekennzeichnet, dass** die Folge der erwähnten Schritte diskontinuierlich stattfindet.

5. Lernverfahren nach einem der vorangehenden Ansprüche, **dadurch gekennzeichnet, dass** das Speichen der Position des Gegenstands erfolgt, indem der Position des Gegenstands ein digitaler Wert zugeordnet und dieser digitale Wert gespeichert wird.

6. Lernverfahren nach einem der vorangehenden Ansprüche, **dadurch gekennzeichnet, dass** der erwähnte gespeicherte digitale Wert um eine vorbestimmte Grösse korrigiert wird.

7. Lernverfahren nach einem der vorangehenden Ansprüche, **dadurch gekennzeichnet, dass** der bewegliche Gegenstand ein Rolladen ist und die erste Position eine geschlossene Position und die zweite Position eine offene Position ist.

8. Lernverfahren nach Anspruch 7, **dadurch gekennzeichnet, dass** es sich um einen Rolladen mit aufeinanderlegbaren Lamellen handelt und dass die geschlossene Position einer Position entspricht, in der alle sichtbaren Lamellen aufeinandergelegt sind.

9. Vorrichtung zum Durchführen des Verfahrens nach einem der vorangehenden Ansprüche, **dadurch gekennzeichnet, dass** sie wenigstens einen Sender (E) und einen Empfänger (R) aufweist, der mit einer Betätigungsvorrichtung verbunden ist, welche einen beweglichen Gegenstand betätigenden Motor (M) steuert, wobei diese Betätigungsvorrichtung einen Zähler (CNT), eine logische Verarbeitungseinheit (ULT), die mit wenigstens zwei Speichern (CNT1, CNT2) verbunden ist, deren gespeicherte Werte Zählerwerten entsprechen, welche die Endstellungen des beweglichen Gegenstands identifizieren, sowie einen die Anschläge erfassenden Detektor (DBE) aufweist.
